# EUROPEAN PATENT APPLICATION

(11) **EP 4 813 772 A1**
(43) Date of publication of application: **30.09.2026**
(21) Application number: 24883716.3
(22) Date of filing: 16.01.2024
(51) Int. Cl.: B60W 10/08, B60W 10/20, B62D 5/06, B60T 13/12

(54) **LOW-ENERGY-CONSUMPTION PORT CONTAINER AGV/IGV ELECTRO-HYDRAULIC CONTROL SYSTEM AND METHOD**

(30) Priority: 02.11.2023 CN 202311445024
(71) Applicant: Shanghai Zhenhua Heavy Industries Co., Ltd., Shanghai 200125 (CN)
(72) Inventor: SONG, Yu, Shanghai 200125 (CN); ZHANG, Xinjie, Shanghai 200125 (CN); GUO, Fenglong, Shanghai 200125 (CN); ZHANG, Jianmin, Shanghai 200125 (CN); LIU, Dongyi, Shanghai 200125 (CN); DING, Xiaofeng, Shanghai 200125 (CN)
(74) Representative: Cabinet Chaillot
(86) International application number: PCT/CN2024/072494
(87) International publication number: WO 2025/091698

(57) **Abstract**

A low-energy-consumption port container AGV/IGV electro-hydraulic control system and method. The system includes an AGV/IGV body (100), and a drive axle (7), a steering electro-hydraulic servo power unit (1), a parking brake electro-hydraulic power unit (2), and an electro-hydraulic system controller (3), in which, the drive axle (7), the steering electro-hydraulic servo power unit (1), the parking brake electro-hydraulic power unit (2), and the electro-hydraulic system controller (3) are arranged on the AGV/IGV body (100); the steering electro-hydraulic servo power unit (1) includes a variable-frequency/servo motor and a bidirectional high-pressure hydraulic pump, the bidirectional high-pressure hydraulic pump is driven by the variable-frequency/servo motor and is connected to the drive axle (7); the parking brake electro-hydraulic power unit (2) includes a motor, a unidirectional high-pressure hydraulic pump, and a brake (10); the unidirectional high-pressure hydraulic pump is driven via the motor and is connected to the brake (10), and the brake (10) is connected to the drive axle (7); and the electro-hydraulic system controller (3) controls the steering electro-hydraulic servo power unit (1) and the parking brake electro-hydraulic power unit (2).

## Description

### BACKGROUND OF THE INVENTION

### 1. Field of the Invention

The present invention relates to the container AGV/IGV technology, and more specifically, relates to a low-energy port container AGV (Automated Guided Vehicle)/IGV (Intelligent Guided Vehicle) electro-hydraulic control system and method.

### 2. Description of the related Art

With the widespread use of automation and the Dual Carbon strategy, there are more limits on energy consumption of port devices, and more energy-efficient and higher-performing port devices are an inevitable trend for the future.

Currently, hydraulic systems for AGVs/IGVs are still classic centralized oil supply hydraulic systems, in which, pump stations are in communication with actuators by long pipelines, and the actuators are controlled by hydraulic valves to operate. Classic centralized oil supply hydraulic transmission and control systems lead to low investment cost, but still cause problems such as large weight, numerous pipelines, high energy consumption, complex troubleshooting, and large amount of construction work.

### BRIEF SUMMARY OF THE INVENTION

In order to solve above defects in the existing technology, an objective of the present invention is to provide a low-energy-consumption port container AGV/IGV electro-hydraulic control system and method to achieve purposes of energy saving and consumption reduction of a hydraulic system on an AGV/IGV.

To achieve the above objective, the following technical solutions are adopted in the present invention:
in a first aspect, the present invention provides a low-energy-consumption port container AGV/IGV electro-hydraulic control system, including an AGV/IGV body, a drive axle, a steering electro-hydraulic servo power unit, a parking brake electro-hydraulic power unit, and an electro-hydraulic system controller, in which, the drive axle, the steering electro-hydraulic servo power unit, the parking brake electro-hydraulic power unit, and the electro-hydraulic system controller are arranged on the AGV/IGV body;
the steering electro-hydraulic servo power unit includes a variable-frequency/servo motor and a bidirectional high-pressure hydraulic pump which is driven by the variable-frequency/servo motor, and the bidirectional high-pressure hydraulic pump is connected to the drive axle;
the parking brake electro-hydraulic power unit includes a motor, a unidirectional high-pressure hydraulic pump, and a brake, in which, the unidirectional high-pressure hydraulic pump is driven by the motor and is connected to the brake, and the brake is connected to the drive axle; and
the electro-hydraulic system controller is configured to control the steering electro-hydraulic servo power unit and the parking brake electro-hydraulic power unit.

Further, the bidirectional high-pressure hydraulic pump is connected to a left steering cylinder and a right steering cylinder of the drive axle via two hydraulic oil pipes respectively.

Further, the steering electro-hydraulic servo power unit further includes two steering sensors; and
the two steering sensors are configured to correspondingly detect steering angles of the left steering cylinder and the right steering cylinder.

Further, the unidirectional high-pressure hydraulic pump is connected to the brake via the hydraulic oil pipe.

Further, the parking brake electro-hydraulic power unit further includes a pressure sensor for detecting a braking pressure of the unidirectional high-pressure hydraulic pump.

Further, the electro-hydraulic system controller is in communication with the steering electro-hydraulic servo power unit and the parking brake electro-hydraulic power unit via CAN, profinet, or profibus.

In a second aspect, the present invention provides a low-energy-consumption port container AGV/IGV electro-hydraulic control method, including the following workflows performed by the low-energy-consumption port container AGV/IGV electro-hydraulic control system provided in the first aspect of the present invention:
as the container AGV/IGV sends a start signal, sending a start signal for the parking brake electro-hydraulic power unit by the electro-hydraulic system controller to start the parking brake electro-hydraulic power unit, and releasing the brake;
after the pressure sensor detects that the braking pressure reaches a set pressure value, sending a release signal for the brake via the parking brake electro-hydraulic power unit to the container AGV/IGV, controlling the motor of the parking brake electro-hydraulic power unit to stop and remain in a pressure-holding state by the electro-hydraulic system controller;
as the container AGV/IGV is in operation, constantly monitoring the braking pressure via the pressure sensor of the parking brake electro-hydraulic power unit, and if the braking pressure is lower than the set pressure, controlling the motor of the parking brake electro-hydraulic power unit to start working by the electro-hydraulic system controller in order to reach the set pressure value of the braking system; and
circulating the operation until the container AGV/IGV sends a stop signal.

Further, after the container AGV/IGV receives the release signal for the brake, vehicle movement and steering actions can be performed;
during the movement of the container AGV/IGV, a steering angle command is sent in real time; after receiving the steering angle command, the electro-hydraulic system controller performs PID computation based on a current angle value of the drive axle and sends a control command to the steering electro-hydraulic servo power unit, and then the steering electro-hydraulic servo power unit controls the drive axle to turn to the steering angle received by the electro-hydraulic system controller.

The low-energy-consumption port container AGV/IGV electro-hydraulic control system and method provided by the present invention has the following beneficial effects:
1) the number of the steering electro-hydraulic servo power units and the parking brake electro-hydraulic power units can be set according to the number of axles of the container AGV/IGV;
2) mounting positions of the steering electro-hydraulic power unit and the parking brake power unit can be adjusted according to a specific mechanical structure of the container AGV/IGV to achieve mounting nearby; and
3) in combination with the electro-hydraulic system controller, a low-energy-consumption port container AGV/IGV electro-hydraulic control system can be realized, the overall wiring of the container AGV/IGV is simpler, and it is more convenient for troubleshooting, device maintenance and component replacement.

### BRIEF DESCRIPTION OF THE DRAWINGS

FIG. 1 is a schematic diagram of a frame structure of a steering electro-hydraulic servo power unit in a low-energy-consumption port container AGV/IGV electro-hydraulic control system according to the present invention;
FIG. 2 is a schematic diagram of a frame structure of a parking brake electro-hydraulic power unit in a low-energy-consumption port container AGV/IGV electro-hydraulic control system according to the present invention;
FIG. 3 is a schematic diagram of a layout of a low-energy-consumption port container AGV/IGV electro-hydraulic control system according to the present invention under a 2-axis container AGV/IGV;
FIG. 4 is a schematic diagram of a layout of a low-energy-consumption port container AGV/IGV electro-hydraulic control system according to the present invention under a 4-axis container AGV/IGV; and
FIG. 5 is a schematic diagram of a control principle of a low-energy-consumption port container AGV/IGV electro-hydraulic control system according to the present invention under a 2-axis container AGV/IGV.

### DESCRIPTION OF ILLUSTRATIVE EMBODIMENTS

For the sake of better understanding, the technical solutions of the present invention will be further described below in conjunction with the accompanying drawings and embodiments.

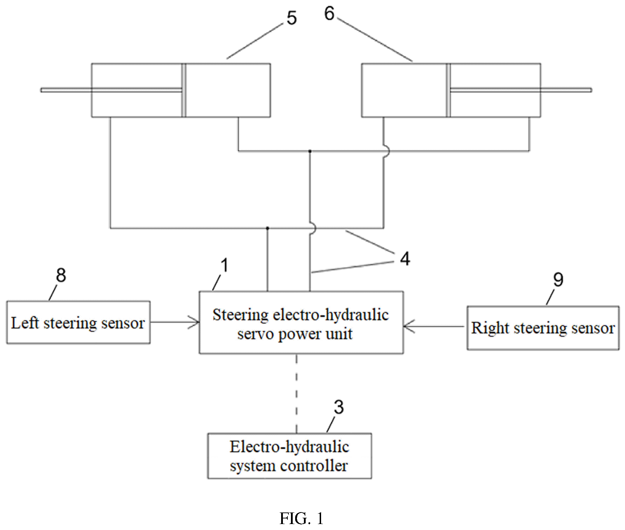

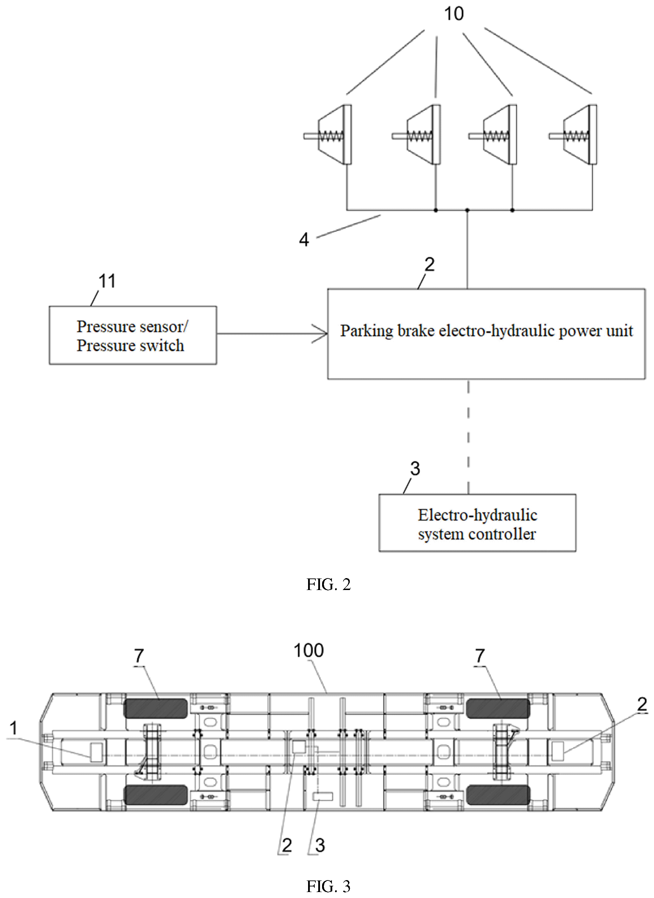

The present invention provides a low-energy-consumption port container AGV/IGV electro-hydraulic control system, including an AGV/IGV body 100, a drive axle 7, a steering electro-hydraulic servo power unit 1, a parking brake electro-hydraulic power unit 2, and an electro-hydraulic system controller 3, in which, the drive axle 7, the steering electro-hydraulic servo power unit 1, the parking brake electro-hydraulic power unit 2, and the electro-hydraulic system controller 3 are mounted on the AGV/IGV body 100. The above is part of the existing technology and will not be repeated here. The difference from the existing technology is as follows:
as shown in FIG. 1 and FIG. 2, the steering electro-hydraulic servo power unit 1 includes a variable-frequency/servo motor and a bidirectional high-pressure hydraulic pump, and the variable-frequency/servo motor drives the bidirectional high-pressure hydraulic pump to realize a volumetric servo control system.

As the steering electro-hydraulic servo power unit 1 is in operation, real-time closed-loop position control is performed according to a steering command of the container AGV/IGV. Besides necessary hydraulic control components integrated internally, the steering electro-hydraulic servo power unit 1 does not require external hydraulic control components such as a directional valve. The bidirectional high-pressure hydraulic pump can be connected to two steering cylinders (a left steering cylinder 5 and a right steering cylinder 6) of the drive axle 7 via only two hydraulic oil pipes 4. Compared with a traditional centralized oil supply hydraulic transmission and control system, the steering electro-hydraulic control system formed by the steering electro-hydraulic servo power unit 1 in the present invention is more efficient, the hydraulic pipeline and cable wiring is simpler, and it is more convenient for troubleshooting, device maintenance and component replacement. Moreover, the steering electro-hydraulic servo power unit 1 can be arranged nearby according to the number of the drive axles 7 of the container AGV/IGV as well as a specific mechanical structure of the vehicle body.

The steering electro-hydraulic servo power unit 1 also includes two steering sensors 8 and 9 which are configured to correspondingly detect steering angles of the left steering cylinder 5 and the right steering cylinder 6.

The parking brake electro-hydraulic power unit 2 includes a motor, a unidirectional high-pressure hydraulic pump, and a brake 10; the unidirectional high-pressure hydraulic pump is driven by the motor and is connected to the brake 10; and the brake 10 is connected to the drive axle 7 to realize a volumetric control system.

During operation, the parking brake electro-hydraulic power unit 2 monitors a braking pressure of the unidirectional high-pressure hydraulic pump in real time and always keeps the braking pressure within a certain range (after the braking pressure reaches a set value, the electro-hydraulic system controller 3 sends a command to stop the motor, and at this time, high-pressure oil is sealed in the unidirectional high-pressure hydraulic pump via a hydraulic valve in the parking brake electro-hydraulic power unit 2; as time goes on, there will be some leakage to make the pressure in the brake 10 lower than the set value, at this time, the electro-hydraulic system controller 3 will determine and control the motor and replenish the system pressure; after the vehicle stops and the power is cut off or in a case of parking braking, the electro-hydraulic system controller 3 controls a solenoid valve in the parking brake electro-hydraulic power unit 2 to de-energize, thus the unidirectional high-pressure hydraulic pump will push a brake piston to brake via a spring inside). The parking brake electro-hydraulic power unit 2 can be arranged according to the mechanical structure of the container AGV/IGV body, and various control methods such as the parking brake electro-hydraulic power unit 2 driving one brake 10, or driving a plurality of brakes 10 in parallel (based on the number of the drive axles 7) can be achieved.

The parking brake electro-hydraulic power unit 2 also includes a pressure sensor 11 for detecting the braking pressure of the unidirectional high-pressure hydraulic pump.

The electro-hydraulic system controller 3 is provided with a high-performance processor and is in communication with the steering electro-hydraulic servo power unit 1 and the parking brake electro-hydraulic power unit 2 in real time via CAN, profinet or profibus bus. Moreover, the electro-hydraulic system controller 3 is connected to the vehicle electrical control system of the container AGV/IGV via the bus, and processes and computes according to the vehicle control command of the container AGV/IGV and the collected steering angle as well as the braking pressure information, and outputs the computation results to the steering electro-hydraulic servo power unit 1 and the parking brake electro-hydraulic power unit 2 for execution.

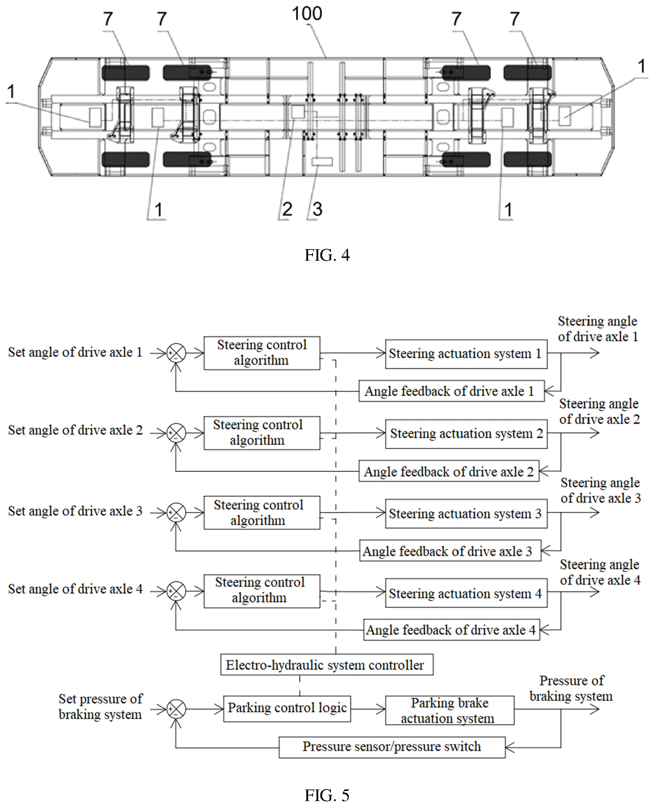

The container AGV/IGV is generally provided with 2 axles (as shown in FIG. 3) or 4 axles (as shown in FIG. 4), it is mainly different in the number of the drive axles 7; in the present invention, the number of the steering electro-hydraulic servo power units 1 and the number of the parking brake electro-hydraulic power units 2 are matched with the number of the drive axles 7, and the steering electro-hydraulic servo power units 1 and the parking brake electro-hydraulic power units 2 are mounted nearby on the AGV/IGV body 100.

In the present invention, in order to achieve the purposes of energy saving and consumption reduction of the AGV/IGV hydraulic system, the AGV/IGV hydraulic system is the electro-hydraulic power unit transmission and control system instead of the traditional centralized oil supply hydraulic system. That is, the functions of an original steering system and parking brake system are implemented by the steering electro-hydraulic servo power unit and the parking brake electro-hydraulic power unit, respectively.

The electro-hydraulic power unit is subjected to closed-loop volume control, which greatly improves the volumetric efficiency of the electro-hydraulic system, has extremely low standby power consumption, and does not require a cooling system. An integrated electro-hydraulic design is utilized, such that the electro-hydraulic power unit is smaller in size. Moreover, the electro-hydraulic power supply and an electro-hydraulic controller thereof are connected via a communication bus, thereby realizing a modular and distributed system architecture for the AGV/IGV electro-hydraulic control system. Therefore, a large number of hydraulic pipelines can be saved, the pipeline construction and arrangement can be avoided, and faulty modules can be quickly replaced. As the hydraulic pipelines are deceased, the risks of hydraulic oil leakage and contamination can be reduced. The electro-hydraulic power supply and the electro-hydraulic controller are connected via the communication bus, so that the number of control cables can be decreased; and the wiring of the AGV/IGV is simpler, and it is more convenient for troubleshooting, device maintenance and component replacement.

The present invention also provides a low-energy-consumption port container AGV/IGV electro-hydraulic control method, including the following workflows performed by the low-energy-consumption port container AGV/IGV electro-hydraulic control system in the present invention:
as the container AGV/IGV sends a start signal, sending a start signal for the parking brake electro-hydraulic power unit 2 by the electro-hydraulic system controller 3 to start the parking brake electro-hydraulic power unit 2, and releasing the brake 10;
after the pressure sensor 11 detects that the braking pressure reaches a set pressure value, sending the release signal for the brake 10 via the parking brake electro-hydraulic power unit 2 to the container AGV/IGV, controlling the motor of the parking brake electro-hydraulic power unit 2 to stop and remain in a pressure-holding state by the electro-hydraulic system controller 3;
as the container AGV/IGV is in operation, constantly monitoring the braking pressure via the pressure sensor 11 of the parking brake electro-hydraulic power unit 2, and if the braking pressure is lower than the set pressure, controlling the motor of the parking brake electro-hydraulic power unit 2 to start working by the electro-hydraulic system controller 3 in order to reach the set pressure value of the braking system; and
circulating the operation until the container AGV/IGV sends a stop signal.

As shown in FIG. 5, after the container AGV/IGV receives the release signal for the brake, vehicle movement and steering actions can be performed;
during the movement of the container AGV/IGV, a steering angle command is sent in real time; after receiving the steering angle command, the electro-hydraulic system controller 3 performs PID computation based on a current angle value of the drive axle 7 and sends a control command to the steering electro-hydraulic servo power unit 2, and then the steering electro-hydraulic servo power unit 2 controls the drive axle 7 to turn to the steering angle received by the electro-hydraulic system controller 3.

In the present invention, by means of the cooperation of the above elements, a PID control algorithm, and the workflows of the electro-hydraulic system, the purposes of energy saving and consumption reduction of the container AGV/IGV electro-hydraulic control system can be achieved.

Those skilled in the art should recognize that the above embodiments are merely illustrative of the present invention and are not intended to limit the present invention. Any variations or modifications to the above embodiments that are within the spirit and essence of the present invention will fall within the scope of the claims of the present invention.

## Claims

1. A low-energy-consumption port container AGV/IGV electro-hydraulic control system, comprising an AGV/IGV body, a drive axle, a steering electro-hydraulic servo power unit, a parking brake electro-hydraulic power unit, and an electro-hydraulic system controller, wherein the drive axle, the steering electro-hydraulic servo power unit, the parking brake electro-hydraulic power unit, and the electro-hydraulic system controller are arranged on the AGV/IGV body;
the steering electro-hydraulic servo power unit comprises a variable-frequency/servo motor and a bidirectional high-pressure hydraulic pump which is driven by the variable-frequency/servo motor, and the bidirectional high-pressure hydraulic pump is connected to the drive axle;
the parking brake electro-hydraulic power unit comprises a motor, a unidirectional high-pressure hydraulic pump, and a brake, in which, the unidirectional high-pressure hydraulic pump is driven by the motor and is connected to the brake, and the brake is connected to the drive axle; and
the electro-hydraulic system controller is configured to control the steering electro-hydraulic servo power unit and the parking brake electro-hydraulic power unit.

2. The low-energy-consumption port container AGV/IGV electro-hydraulic control system according to claim 1, wherein the bidirectional high-pressure hydraulic pump is connected to a left steering cylinder and a right steering cylinder of the drive axle via two hydraulic oil pipes respectively.

3. The low-energy-consumption port container AGV/IGV electro-hydraulic control system according to claim 2, wherein the steering electro-hydraulic servo power unit further comprises two steering sensors; and
the two steering sensors are configured to correspondingly detect steering angles of the left steering cylinder and the right steering cylinder.

4. The low-energy-consumption port container AGV/IGV electro-hydraulic control system according to claim 1, wherein the unidirectional high-pressure hydraulic pump is connected to the brake via the hydraulic oil pipe.

5. The low-energy-consumption port container AGV/IGV electro-hydraulic control system according to claim 4, wherein the parking brake electro-hydraulic power unit further comprises a pressure sensor for detecting a braking pressure of the unidirectional high-pressure hydraulic pump.

6. The low-energy-consumption port container AGV/IGV electro-hydraulic control system according to claim 1, wherein the electro-hydraulic system controller is in communication with the steering electro-hydraulic servo power unit and the parking brake electro-hydraulic power unit via CAN, profinet, or profibus.

7. A low-energy-consumption port container AGV/IGV electro-hydraulic control method, comprising the following workflows performed by the low-energy-consumption port container AGV/IGV electro-hydraulic control system according to any one of claims 1 to 6:
as the container AGV/IGV sends a start signal, sending a start signal for the parking brake electro-hydraulic power unit by the electro-hydraulic system controller to start the parking brake electro-hydraulic power unit, and releasing the brake;
after the pressure sensor detects that the braking pressure reaches a set pressure value, sending a release signal for the brake via the parking brake electro-hydraulic power unit to the container AGV/IGV, controlling the motor of the parking brake electro-hydraulic power unit to stop and remain in a pressure-holding state by the electro-hydraulic system controller;
as the container AGV/IGV is in operation, constantly monitoring the braking pressure via the pressure sensor of the parking brake electro-hydraulic power unit, and if the braking pressure is lower than the set pressure, controlling the motor of the parking brake electro-hydraulic power unit to start working by the electro-hydraulic system controller in order to reach the set pressure value of the braking system; and
circulating the operation until the container AGV/IGV sends a stop signal.

8. The low-energy-consumption port container AGV/IGV electro-hydraulic control method according to claim 7, wherein after the container AGV/IGV receives the release signal for the brake, vehicle movement and steering actions can be performed;
during the movement of the container AGV/IGV, a steering angle command is sent in real time; after receiving the steering angle command, the electro-hydraulic system controller performs PID computation based on a current angle value of the drive axle and sends a control command to the steering electro-hydraulic servo power unit, and then the steering electro-hydraulic servo power unit controls the drive axle to turn to the steering angle received by the electro-hydraulic system controller.
